# EUROPÄISCHE PATENTSCHRIFT

(11) **EP 0 798 142 B1**
(45) Veröffentlichungstag und Bekanntmachung des Hinweises auf die Patenterteilung: **04.03.1998**
(21) Anmeldenummer: 96105047.3
(22) Anmeldetag: 29.03.1996
(51) Int. Cl.: B60C 19/08, B60C 11/00

(54) **Fahrzeugluftreifen**
Vehicle tyre
Bandage pneumatique pour véhicule

(43) Veröffentlichungstag der Anmeldung: 01.10.1997
(73) Patentinhaber: Continental Aktiengesellschaft, 30165 Hannover (DE)
(72) Erfinder: Braatz, Martin, Dipl.-Ing., 52222 Stolberg (DE); Baumhöfer, Johannes, Dipl.-Ing., 30900 Mellendorf (DE); Wies, Burkard, Dr.Ing.,Dipl.-Phys., 30455 Hannover (DE); Söhnen, Dietmar, Dr. Chem., 52074 Aachen (DE); Wrede, Martin, Dipl.-Ing., 34497 Korbach (DE); Lindner, Siegfried, Dipl.-Ing., 34466 Wolfhagen (DE)

(56) Entgegenhaltungen:
- EP-A- 0 658 452
- EP-A- 0 681 931
- EP-A- 0 705 722
- EP-A- 0 718 127

## Beschreibung

Die Erfindung betrifft einen Fahrzeugluftreifen mit einer Karkasse die vom Zenitbereich des Reifens bis in die Wulstbereiche reicht, weiterhin mit einem Laufstreifen und einem zwischen Laufstreifen und Karkasse angeordneten Gürtelpaket, wobei der Laufstreifen aus zumindest zwei Gummimischungen aufgebaut ist und die mit der Fahrbahn in Berührung kommende Fläche des Laufstreifens zu über die Hälfte von einer ersten Gummimischung (Cap) mit einem spezifischen elektrischen Widerstand größer 10 exp 10 Ohm x cm eingenommen wird.

Bei einem Fahrzeug besteht im allgemeinen das Problem, daß es während des Fahrbetriebes elektrisch aufgeladen wird. Eine ausreichende Ableitung der elektrostatischen Ladungen ist aber nur dann gegeben, wenn neben anderen externen Maßnahmen die Aufstandsfläche des Reifens ausreichend leitfähig ist und mit der Fahrbahn stetigen Kontakt hat. Wenn das nicht der Fall ist, können Entladungen eintreten, die z. B. vom Fahrer als unangenehm empfunden werden. Insbesondere bei Silica enthaltenden Laufflächen, die dem Reifen an sich gute Fahreigenschaften, wie einen geringen Rollwiderstand und gute Naßrutscheigenschaften verleihen, ist deren niedrigere elektrische Leitfähigkeit eine mischungsbedingte nachteilige physikalische Eigenschaft.

Aus EP 658 452 ist bekannt, eine leitfähige Schicht durch die gesamte Laufstreifenstärke einzubringen und somit eine leitende Verbindung zur Gürtelgummierung bzw. Bandagengummierung herzustellen. Da die Gürtelgummierung (Bandagengummierung) aber im allgemeinen geringer mit Füllstoffen (Ruß) versehen ist und die Leitfähigkeit vom Rußgehalt bzw. Rußtyp abhängt, ist die Leitfähigkeit der Gürtelgummierung oder Bandagengummierung begrenzt. Eine Erhöhung des Rußgehaltes der Gürtelgummierung (Bandagengummierung) wirkt einer Erhöhung der Lebensdauer der Gürtelgummierung (Bandagengummierung) entgegen und führt zu höheren Rollwiderstandskräften. Diese beiden Auswirkungen werden im allgemeinen als nachteilig bewertet. Als Schwierigkeit erweist sich außerdem der Fakt, daß für die Gürtelgummierung (Bandagengummierung) verstärkende Ruße eingesetzt werden. Diese haben aber den Nachteil, daß sie weniger positiv die Leitfähigkeit der Gürtelgummierung (Bandagengummierung) beeinflussen. Wenn allerdings Leitfähigkeitsruße verwendet werden, werden die mechanischen Eigenschaften der Gürtelgummierung (Bandagengummierung) ungünstig beeinflußt, da Leitfähigkeitsruße nicht verstärkend wirken. So hängt die Leitfähigkeit der Gürtelgummierung (Bandagengummierung) nicht nur vom Rußgehalt, sondern auch vom Rußtyp ab und kann aus den soeben genannten Gründen nicht im wünschenswertem Maße variiert werden, damit eine gesicherte Ladungsableitung zur Straßenoberfläche gewährleistet wird.

Aus dieser Schrift (EP 658 452) ist weiterhin bekannt, über den Schulterbereich eine rußhaltige Gummischicht verlaufen zu lassen, die im direkten Kontakt zur leitfähigeren Seitenwandgummierung steht. Prinzipiell ist bei den Varianten der Schrift EP 658 452 nicht sichergestellt, daß bei den verschiedenartigsten Belastungen (Lastzustand, Kurvenfahrten), denen ein Reifen ausgesetzt ist, stets ein Kontakt der leitfähigen Schicht zur Fahrbahn gesichert ist, insbesondere wenn es Kontaktprobleme bezüglich der elektrischen Leitung zwischen Felge und Reifen gibt.

Der Erfindung liegt die Aufgabe zugrunde, bei einem Reifen der eingangs genannten Art eine ausreichende elektrische Leitfähigkeit auch bei unterschiedlichen Belastungen des Reifens bereitzustellen, ohne dabei Einbußen in den Fahreigenschaften bzw. vorzeitige Defekte des Reifens hinzunehmen.

Gelöst wird diese Aufgabe erfindungsgemäß dadurch, daß die übrige mit der Fahrbahn in Berührung kommende Fläche von einer zweiten Gummimischung (Base), deren spezifischer elektrischer Widerstand kleiner 10 exp 8 Ohm x cm ist, eingenommen wird, daß die erste Gummimischung in radialer Richtung mindestens 40 % der gesamten Laufstreifendicke einnimmt, daß die zweite Gummimischung bis an das Gürtelpaket heranreicht und unterhalb der ersten Gummimischung den gesamten Raum zwischen dieser und dem Gürtelpaket einnimmt und weiterhin an ihren beiden axialen Begrenzungen zu den Seiten des Reifens mit zumindest einer weiteren Gummimischung in Kontakt steht, die einen spezifischen elektrischen Widerstand kleiner 10 exp 8 Ohm x cm aufweist.

Unter der mit der Fahrbahn in Berührung kommenden Fläche eines Reifens ist annäherungsweise der 0,7-fache Wert der Nennweite dieses Reifens zu verstehen. Unter dem Begriff Gürtelpaket soll die konstruktive Einheit der verstärkenden in Gummi gebetteten Festigkeitsträger des Gürtels und der gegebenenfalls vorhandenen Bandage fallen.

Durch den erfindungsgemäßen Laufstreifenaufbau wird (von beiden Seitenwänden ausgehend über die flächenhaft über dem Gürtelpaket ausgedehnte leitfähige Base-Gummimischung) eine gesicherte Ladungsabfuhr auch bei verschiedenen Reifenbelastungen zur Straßenoberfläche gewährleistet. Die Ladungsableitung erfolgt ausgehend von zwei elektrisch sehr gut leitenden Seitenwänden des Reifens letztendlich zur Straßenoberfläche hin, so daß die Potentialdifferenz groß ist und eine maximale Ladungszahl abgeleitet werden kann. Durch die ausgedehnte leitfähige Base-Gummimischung, die beide leitfähigen Seitenwände miteinander verbindet, wird es erfindungsgemäß möglich, auch eine gesicherte Ableitung zu erzielen, wenn von einer der beiden umlaufenden Felgenseiten her kein Ladungstransport zu einer Reifenseitenwand erfolgen kann. Das ist z. B. dann der Fall, wenn eine umlaufende Kontaktfläche der Felge zum Reifen eine dicke Lackierung aufweist, so daß sich eine isolierende Schicht auf dieser Kontaktfläche der Felge befindet. Eine ausreichende Ableitung zur Straßenoberfläche kann dann immer noch über die andere umlaufende Kontaktfläche der Felge zum Reifen in der Art erfolgen, daß die Ladungen von der elektrisch gut leitenden Seitenwand zur elektrisch gut leitenden Base-Gummimischung übertragen werden können und an deren Durchbruchstelle zur mit der Fahrbahn in Berührung kommenden Fläche abgeleitet werden. Es ist aber auch möglich, daß der Laufstreifen einen Wing (Schulterpolster, Flügel) aufweist, der eine Verbindung zwischen der Seitenwand und der axialen Begrenzung des Laufstreifens herstellt. Dieser Wing wird bei der Herstellung (z. B. Extrusion) des unvulkanisierten Laufstreifens an diesen seitlich angebracht und bildet somit einen Teil dessen. Im allgemeinen besteht dieser Wing aus einer seitenwandähnlichen Mischung, so daß der Kontakt zwischen der leitfähigen Basegummimischung und der Winggummimischung bereits die gewünschte hohe Ableitung garantiert.

Außerdem weisen die erfindungsgemäßen Fahrzeugluftreifen nicht nur eine erhöhte Leitfähigkeit auf, sondern es wird auch der Komfort des Reifens erhöht. Da die Base-Gummimischung des Laufstreifens die darüber befindliche Cap-Gummimischung durchdringt, wird das Volumen der Base-Gummimischung im gesamten Laufstreifen erhöht. Damit wird die Dämpfung (diese wird prinzipiell von der Base-Gummimischung positiv beeinflußt) des Reifens verbessert, ohne dabei Eigenschaftseinbußen z. B. bezüglich des Naßgriffs oder des Rollwiderstandes der Lauffläche hinnehmen zu müssen und gleichzeitig die Leitfähigkeit des Reifens erhöht. Des weiteren erhält man einen Reifen, der unkompliziert hergestellt werden kann, da nur geringfügige Änderungen im bisherigen Herstellungsprozeß erforderlich sind.

Besonders vorteilhaft ist, wenn die Base-Gummimischung im Mittelbereich des Laufstreifens bis in die mit der Fahrbahn in Berührung kommende Fläche des Laufstreifens reicht. Das hat den Vorteil, daß, obwohl sich die elektrisch leitende Fläche im Mittelbereich des Laufstreifens befindet, die Ladungsableitung von der Seitenwand (Wing) her erfolgen kann, und somit eine schnelle und gesicherte Abführung der Ladung vom Fahrzeug zur Straßenoberfläche erzielt wird. Ein weiterer Vorteil einer im Mittelbereich der Bodenaufstandsfläche befindlichen leitfähigen Base-Gummimischung besteht darin, daß der Reifen auch bei wenig beladenem Fahrzeug durch eine leitende Fläche mit der Straßenoberfläche im Kontakt steht. Der Mittelbereich der mit der Fahrbahn in Berührung kommenden Fläche eines Reifens soll ausgehend vom Zenit eine Ausdehnung in beiden axialen Richtungen des Reifens von bis zu 25 % der Gesamtbreite der mit der Fahrbahn in Berührung kommenden Fläche aufweisen. Die Base-Gummimischung soll an der mit der Fahrbahn in Berührung kommenden Fläche des Laufstreifens eine Breite von mindestens 1 mm bis maximal 30 % der gesamten mit der Fahrbahn in Berührung kommenden Breite einnehmen.

Es ist aber auch möglich, daß die leitfähige Base-Gummimischung die Cap-Gummimischung im Mittelbereich des Laufstreifens und/oder im Schulterbereich die mit der Fahrbahn in Berührung kommenden Fläche des Laufstreifens durchdringt. Damit werden in der mit der Fahrbahn in Berührung kommenden Fläche mehrere leitfähige Stellen erzeugt, die in der Lage sind, die geforderte Ableitung an elektrostatischer Ladung zu gewährleisten. Der Schulterbereich schließt sich an den Mittelbereich der mit der Fahrbahn in Berührung kommenden Fläche des Laufstreifens an, so daß die Base-Gummimischung zumindest bis in die mit der Fahrbahn in Berührung kommenden Fläche des Laufstreifens reicht.
Es ist möglich, daß die Base-Gummimischung die Cap-Gummimischung an einer oder an beiden Schultern durchdringt. Vorteilhafterweise soll sich an beiden Schultern die Gummimischung an der mit der Fahrbahn in Berührung kommenden Fläche des Laufstreifens befinden, um stets einen gesicherten Kontakt zur Straßenoberfläche herzustellen.

Es ist vorteilhaft, wenn die Base-Gummimischung die Cap-Gummimischung in der Art durchdringt, daß die Base-Gummimischung im fertigen Reifen zumindest eine kompakte Profilklotzreihe bildet. Damit wäre der Vorteil verbunden, daß sich die Mischungstrennschicht (vom radial Inneren des Laufstreifens gesehen) nur bis zur Profilgrundnähe reicht. Da solche Mischungstrennschichten immer in irgendeiner Weise Probleme z.B. bezüglich der Haftung aneinander mit sich bringen, ist diese erfindungsgemäße Variante besonders günstig.

Weiterhin besteht die Möglichkeit, die zweite Gummischicht (Base) anders farblich (Schattierung) zu gestalten als die Cap-Gummischicht. Dies ist z. B. durch unterschiedlichen Rußgehalt bzw. -typ oder durch verschiedene Farbkörper möglich. Damit wird das Profildesign optisch unterstützt, was in den meisten Fällen von Kunden erwünscht ist. Alternativ dazu ist es aber auch möglich, daß die erfindungsgemäße Cap- und Base-Gestaltung für den Kunden nicht sichtbar wird. Prinzipiell kann erfindungsgemäß auf diesbezügliche Kundenwünsche eingegangen werden. Des weiteren ist der erfindungsgemäße Cap- und Baseaufbau bei allen denkbaren Profildesigns anwendbar.

Vorzugsweise besteht die Base aus einer Ruß enthaltenden Gummimischung. Es sind aber auch andere Mischungen denkbar, sofern sie einen spezifischen elektrischen Widerstand kleiner 10 exp 8 Ohm x cm aufweisen. Je geringer der spezifische elektrische Widerstand der Base-Gummimischung ist, desto mehr Ladungen können aufgrund der hohen Potentialdifferenz zur Straßenoberfläche abgeleitet werden. Die Cap soll vorzugsweise aus einer Silica enthaltenden Mischung bestehen. Diese erfindungsgemäße Gestaltung des Laufstreifens hat den Vorteil, daß die Eigenschaften einer Silica-Gummimischung (Cap), nämlich einen hervorragenden Naßgriff und einen sehr geringen Rollwiderstand mit den sehr guten Eigenschaften einer zweiten Gummimischung (Base), nämlich den guten dämpfenden Eigenschaften kombiniert werden kann und dabei gleichzeitig die Leitfähigkeit des Reifens erhöht wird. Aber auch hierfür können Mischungen verwendet werden, die mit anderen Füllstoffen gefüllt sind und einen spezifischen elektrischen Widerstand größer 10 exp 10 Ohm x cm aufweisen.

Ein Ausführungsbeispiel soll anhand einer schematischen Zeichnung näher erläutert werden.

Es zeigt:
- Fig. 1: einen radialen Schnitt durch einen Fahrzeugluftreifen mit einem erfindungsgemäßen Laufstreifenaufbau
- Fig. 2: einen radialen Teilschnitt durch einen Laufstreifen eines Fahrzeugluftreifens, wobei die Base-Gummimischung die Cap-Gummimischung im Mittelbereich der mit der Fahrbahn in Berührung kommenden Fläche des Laufstreifens 2 mal durchdringt.
- Fig. 3: einen radialen Teilschnitt durch einen Laufstreifen eines Fahrzeugluftreifens, wobei die Base-Gummimischung einen kompakten Profilklotz bildet.
- Fig. 4: einen radialen Teilschnitt durch einen Laufstreifen eines Fahrzeugluftreifens, wobei die Base-Gummimischung die Cap-Gummimischung im Schulterbereich der mit der Fahrbahn in Berührung kommenden Fläche des Laufstreifens durchdringt.

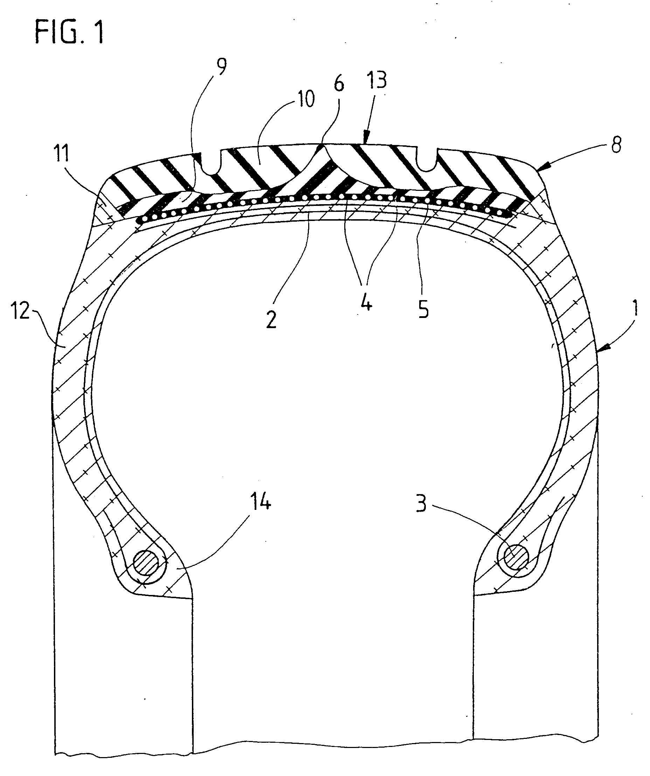

In der Figur 1 ist ein Fahrzeugluftreifen 1 mit einer Karkasse 2, die um die Wulstkerne 3 geschlagen ist und radial über der Karkasse 2 angeordneten Gürtel 4, der aus Festigkeitsträgern 5 aufgebaut ist, dargestellt. Über dem Gürtel 4 befindet sich ein Laufstreifen 8, der einen Cap- 10 und Baseaufbau 9 aufweist. Dabei nimmt die Cap-Gummimischung 10 einen Anteil in radialer Richtung der gesamten Laufstreifendicke von ca. 60 % ein. Der Laufstreifen 8 weist an seinen radial äußeren Enden einen Wing (Flügel) auf. Der Wing 11 weist eine ähnliche Gummimischungszusammensetzung wie die angrenzenden Seitenwände

In der Figur 1 ist ein Fahrzeugluftreifen 1 mit einer Karkasse 2, die um die Wulstkerne 3 geschlagen ist und radial über der Karkasse 2 angeordneten Gürtel 4, der aus Festigkeitsträgern 5 aufgebaut ist, dargestellt. Über dem Gürtel 4 befindet sich ein Laufstreifen 8, der einen Cap- 10 und Baseaufbau 9 aufweist. Dabei nimmt die Cap-Gummimischung 10 einen Anteil in radialer Richtung der gesamten Laufstreifendicke von ca. 60 % ein. Der Laufstreifen 8 weist an seinen radial äußeren Enden einen Wing (Flügel) auf. Der Wing 11 weist eine ähnliche Gummimischungszusammensetzung wie die angrenzenden Seitenwände 12 auf. Eine mögliche Mischungszusammensetzung für die einzelnen Bestandteile des Laufstreifens 8 ist in der Tabelle aufgelistet. Die Einheit pphr bezieht sich auf 100 Gewichtsteile Kautschuk. Da der spezifische elektrische Widerstand einer Gummimischung von vielen Herstellungsparametern (z. B. Mischstufenzahl oder wann der Ruß zugegeben wird) abhängt, können nur ungefähre Angaben aufgeführt werden.

| Bestandteil | Zusammensetzung [pphr] | | |
|---|---|---|---|
| | Cap | Base | Wing/Seitenwand |
| Naturkautschuk | 10 | 10 | 70 |
| Butadienkautschuk | 30 | 30 | 30 |
| Lös. SBR | 60 | 60 | - |
| Aktivruß | 10 | 70 | 55 |
| gefällte Kieselsäure | 70 | 10 | - |
| Alterungsschutzmittel | 3 | 3 | 1,5 |
| Silan (TESPT) | 10 | - | - |
| Zinkweiß | 3 | 3 | 5 |
| Stearinsäure | 3 | 3 | 2 |
| Schwefel | 1,5 | 1,5 | 2,5 |
| Beschleuniger | 3,5 | 3,5 | 1 |
| Kolophonium | - | - | 2 |
| Schutzwachs | - | - | 2 |
| Weichmacheröl | 20 | 20 | 3 |
| spezifischer elektrischer Widerstand (Ohm x cm) | > 10exp11 | ca.60 | ca. 10exp4 |

Im Bereich um den Zenit 6 der mit der Fahrbahn in Berührung kommenden Fläche 13 des Laufstreifens 8 ist die Base 9 so gestaltet, daß sie in die mit der Fahrbahn in Berührung kommenden Fläche 13 des Laufstreifens 8 reicht. Da die Base 9 in direktem Kontakt (über eine Strecke von ca. 4 mm) mit der Wing-Gummimischung 11 steht und diese eine hervorragende Leitfähigkeit besitzt, kann eine Ableitung der elektrostatischen Ladung ausgehend von der nicht dargestellten Felge, auf die der Fahrzeugluftreifen 1 mit seinen Wülsten 14 montiert ist, über die elektrisch leitenden Seitenwände 12, den beiden Wings 11 bis in die Base 9 erfolgen. Dabei besteht wie u. a. aus der Figur 1 ersichtlich, auch ein direkter Kontakt der Base-Gummimischung 9 zur Seitenwandmischung 12 über eine Ausdehnung von ca. 4 mm, die bei LKW-Reifen eine Länge bis zu 30 mm erreichen kann. Da die Ladungsabfuhr gleichzeitig über zwei Seiten zur flächenhaft ausgehnten leitfähigen Base 9 erfolgt, wird ein besonders guter Ableiteffekt erzielt. Die leitfähige Base 9 hat unmittelbar Kontakt mit der Straßenoberfläche. Dabei bedeckt die Basegummischicht 9 im Mittelbereich auf der mit der Fahrbahn in Berührung kommenden Fläche des Laufstreifens 8 umlaufend z. B. ca. 4 mm. Das hat den Vorteil, daß die guten Eigenschaften der Cap-Gummimischung nicht beeinflußt werden und dabei trotzdem die Leitfähigkeit erhöht wird. Des weiteren hat sich diese Breite als verfahrenstechnisch günstig erwiesen.

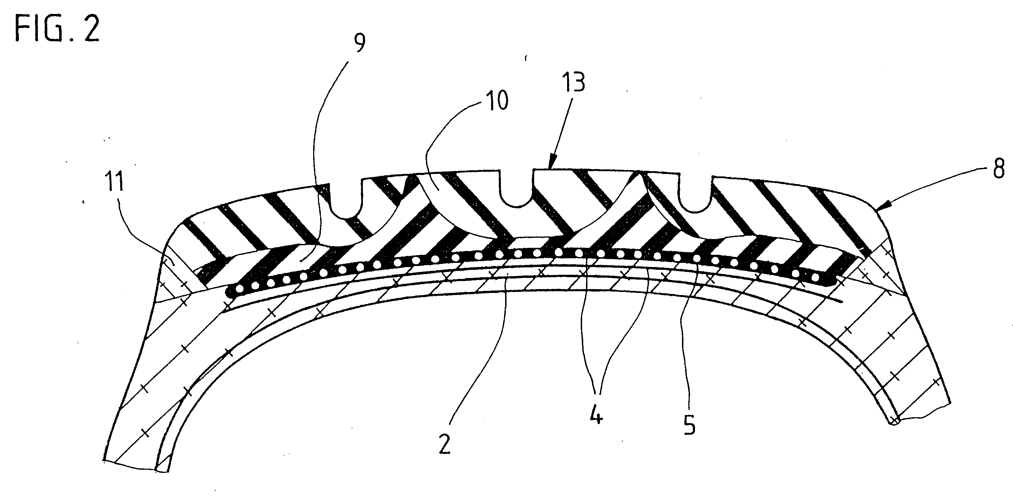

In der Figur 2 ist eine weitere Möglichkeit dargestellt, in welcher Art und Weise die Base-Gummischicht 9 die Cap-Gummischicht 10 durchdringt. Im Mittelbereich des Laufstreifens 8 sind in dessen mit der Fahrbahn in Berührung kommenden Fläche 13 zwei leitfähige Stellen eingebracht worden, die darauf beruhen, daß die leitfähige Base 9 die schlecht leitende Cap 10 durchdringt. Prinzipiell ist es natürlich möglich, daß noch an weiteren Stellen die Base-Gummimischung die Cap-Gummimischung durchbricht, solange gewährleistet ist, daß sich die leitende Base-Gummimischung an der mit der Fahrbahn in Berührung kommenden Fläche 13 des Fahrzeugluftreifens 1 befindet, so daß ein Fahrbahnkontakt gewährleistet ist. Das ist hauptsächlich dann der Fall, wenn sich die Base-Gummimischung 9 in erhabenen Profilabschnitten befindet.

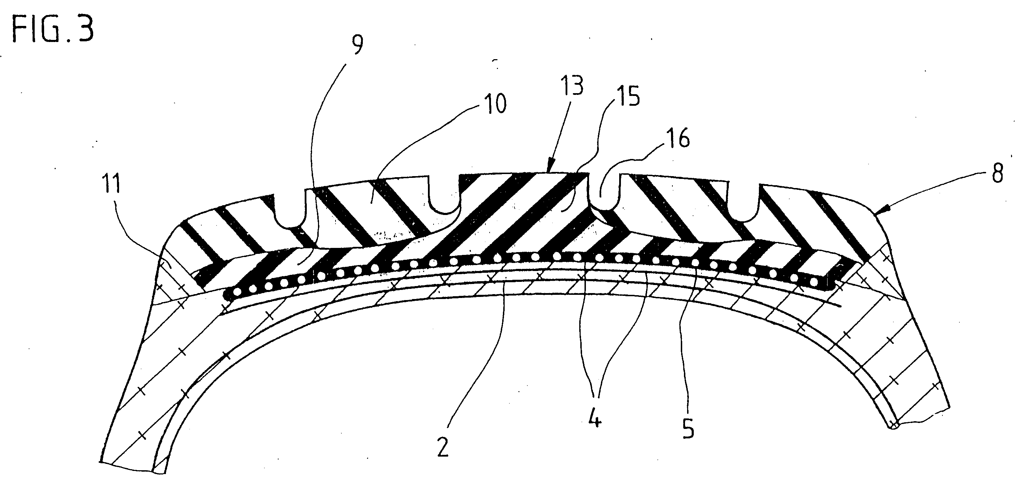

In der Figur 3 ist die Möglichkeit dargestellt, daß ein Profilklotz 15 des Laufstreifens 8 vollständig aus der Base-Gummimischung 9 besteht. Der Profilklotz 15 befindet sich wiederum im Mittelbereich der mit der Fahrbahn in Berührung kommenden Fläche 13 des Laufstreifens 8 und wird von zwei umlaufenden Rillen 16 begrenzt. Dabei ist es vorteilhaft, daß z. B. bei einem wie in der Figur 3 dargestellten vier Längsrillen aufweisendes Profil der mittelste Profilklotz 15 aus der leitenden Base-Gummimischung besteht, um einen sicheren Kontakt bei jeder Beladung des Fahrzeugs zur Fahrbahnoberfläche zu erzielen. Prinzipiell ist es aber auch möglich, daß andere Profilklötze mit der leitenden Base-Gummimischung ausgestattet sind. Zumindest sollen aber nicht mehr als 30 % der mit der Fahrbahn in Berührung kommenden Fläche aus einer Base-Gummimischung bestehen, damit die Eigenschaften der Cap-Mischung (guter Rollwiderstand, Naßrutschverhalten) des gesamten Reifen nicht verloren gehen.

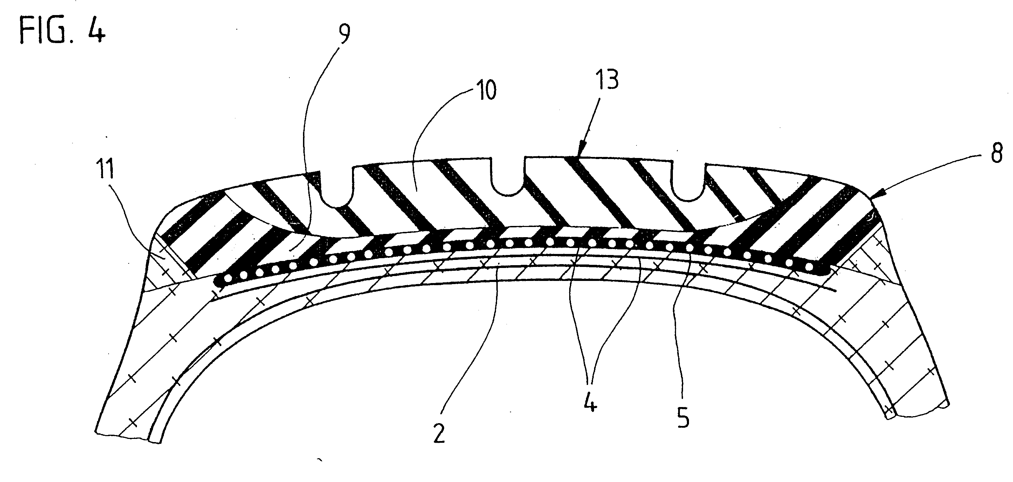

Aus der Figur 4 ist die Variante ersichtlich, daß im Schulterbereich der mit der Fahrbahn in Berührung kommenden Fläche 13 des Laufstreifens 8 des Fahrzeugluftreifens 1 die Base-Mischung 9 die Cap-Gummimischung 10 durchdringt. Dabei hat es sich als günstig erwiesen, wenn die Base-Gummischicht 9 direkt an den leitfähigen Wing 11 grenzt. Die Ladungen werden direkt von der Seitenwand 12 über den Wing 11 abgeleitet. Da die leitfähige Base-Gummischicht 9 sich direkt an die gesamte Fläche des Wings 11 anschließt und außerdem beide Schulterbereiche miteinander verbindet, kann eine optimale Ableitung erreicht werden. Unterstützt wird dieser Effekt auch noch durch den direkten Kontakt der Base-Gummimischung 9 mit der Seitenwand 12, z.B. über eine Strecke von 5 mm. Diese Variante hat sich bei einem schiefstehenden Reifen (durch z. B. Kurvenfahrt) bewährt, bei dem ein leitender Schulterbereich mit der Fahrbahn keinen Kontakt hat und auf der gegenüberliegenden Seite die Felge keinen leitenden Kontakt zum Reifen hat.

Mit der Erfindung wird also ein auch bei verschiedenen Belastungen hervorragend leitfähiger Fahrzeugluftreifen erzielt, der keine Einbußen in seinem Fahrverhalten (z. B. Komfort, Rollwiderstand, Naßrutschverhalten) aufweist und außerdem einfach hergestellt werden kann.

## Patentansprüche

1. Fahrzeugluftreifen (1) mit einer Karkasse (2) die vom Zenitbereich des Reifens bis in die Wulstbereiche (14) reicht, weiterhin mit einem Laufstreifen (8) und einem zwischen Laufstreifen (8) und Karkasse (2) angeordneten Gürtelpaket (4), wobei der Laufstreifen (8) aus zumindest zwei Gummimischungen aufgebaut ist und die mit der Fahrbahn in Berührung kommende Fläche (13) des Laufstreifens (8) zu über die Hälfte von einer ersten Gummimischung (Cap) (10) mit einem spezifischen elektrischen Widerstand größer 10 exp 10 Ohm x cm eingenommen wird, dadurch gekennzeichnet, daß
die übrige mit der Fahrbahn in Berührung kommende Fläche (13) von einer zweiten Gummimischung (Base) (9), deren spezifischer elektrischer Widerstand kleiner 10 exp 8 Ohm x cm ist, eingenommen wird, daß die erste Gummimischung (10) in radialer Richtung mindestens 40 % der gesamten Laufstreifendicke einnimmt, daß die zweite Gummimischung (9) bis an das Gürtelpaket (4) heranreicht und unterhalb der ersten Gummimischung (10) den gesamten Raum zwischen dieser und dem Gürtelpaket (4) einnimmt und weiterhin an ihren beiden axialen Begrenzungen zu den Seiten des Reifens mit zumindest einer weiteren Gummimischung in Kontakt steht, die einen spezifischen elektrischen Widerstand kleiner 10 exp 8 Ohm x cm aufweist.

2. Fahrzeugluftreifen (1) nach Anspruch 1, dadurch gekennzeichnet, daß die zweite Gummimischung (9) im Mittelbereich des Laufstreifens (8) bis in die mit der Fahrbahn in Berührung kommende Fläche (13) des Laufstreifens (8) reicht.

3. Fahrzeugluftreifen (1) nach Anspruch 1, dadurch gekennzeichnet, daß die zweite Gummimischung (9) zumindest in einem Schulterbereich bis in die mit der Fahrbahn in Berührung kommende Fläche (13) des Laufstreifens (8) reicht.

4. Fahrzeugluftreifen (1) nach zumindest einem der vorhergehenden Ansprüche, dadurch gekennzeichnet, daß die erste Gummimischung (10) aus einer Silica enthaltenden Gummimischung besteht.

5. Fahrzeugluftreifen (1) nach zumindest einem der vorhergehenden Ansprüche, dadurch gekennzeichnet, daß die zweite Gummimischung (9) aus einer Ruß enthaltenden Gummimischung besteht.

6. Fahrzeugluftreifen (1) nach zumindest einem der vorhergehenden Ansprüche, dadurch gekennzeichnet, daß zumindest eine Profilklotzreihe (16) des Laufstreifens (8) aus der zweiten Gummimischung (9) besteht.

7. Fahrzeugluftreifen (1) nach zumindest einem der vorhergehenden Ansprüche, dadurch gekennzeichnet, daß die zweite Gummimischung (9) an ihren beiden axialen Begrenzungen zu den Seiten des Reifens hin mit der Wing (11) und/oder Seitenwandmischung (12) in Kontakt steht.

8. Fahrzeugluftreifen (1) nach Anspruch 7, dadurch gekennzeichnet, daß die zweite Gummimischung (9) an ihren beiden axialen Begrenzungen zu den Seiten des Reifens hin mit der Wing (11) und/oder Seitenwandmischung (12) über eine Ausdehnung von mindestens 3 mm in Kontakt steht.

9. Fahrzeugluftreifen (1) nach zumindest einem der vorhergehenden Ansprüche, dadurch gekennzeichnet, daß die zweite Gummimischung (9) im optischen Kontrast zur ersten Gummimischung (10) steht.

## Claims

1. Pneumatic vehicle tyre (1), having a carcase (2) which extends from the crown region of the tyre to the bead regions (14), and also having a tread strip (8) and a belt bundle (4), which is disposed between tread strip (8) and carcase (2), the tread strip (8) being constructed from at least two rubber mixtures, and the area (13) of the tread strip (8), which comes into contact with the roadway, occupying more than half of a first rubber mixture (cap) (10) having a specific electrical resistance greater than 10 exp 10 ohm x cm, characterised in that the remaining area (13) coming into contact with the roadway is occupied by a second rubber mixture (base) (9), which has a specific electrical resistance of less than 10 exp 8 ohm x cm, in that the first rubber mixture (10) occupies at least 40 % of the entire tread strip thickness when viewed with respect to the radial direction, in that the second rubber mixture (9) extends to the belt bundle (4) and occupies, beneath the first rubber mixture (10), the entire space between said mixture and the belt bundle (4), and said second rubber mixture is also in contact with at least one additional rubber mixture, which has a specific electrical resistance of less than 10 exp 8 ohm x cm, at its two axial boundaries with the sides of the tyre.

2. Pneumatic vehicle tyre (1) according to claim 1, characterised in that the second rubber mixture (9) in the central region of the tread strip (8) extends to the area (13) of the tread strip (8) coming into contact with the roadway.

3. Pneumatic vehicle tyre (1) according to claim 1, characterised in that the second rubber mixture (9), at least in one shoulder region, extends to the area (13) of the tread strip (8) coming into contact with the roadway.

4. Pneumatic vehicle tyre (1) according to at least one of the preceding claims, characterised in that the first rubber mixture (10) is formed from a rubber mixture containing silica.

5. Pneumatic vehicle tyre (1) according to at least one of the preceding claims, characterised in that the second rubber mixture (9) is formed from a rubber mixture containing carbon black.

6. Pneumatic vehicle tyre (1) according to at least one of the preceding claims, characterised in that at least one row of profile blocks (16) of the tread strip (8) is formed from the second rubber mixture (9).

7. Pneumatic vehicle tyre (1) according to at least one of the preceding claims, characterised in that the second mixture (9) is in contact with the wing (11) and/or side wall mixture (12) at its two axial boundaries facing towards the sides of the tyre.

8. Pneumatic vehicle tyre (1) according to claim 7, characterised in that the second rubber mixture (9) is in contact with the wing (11) and/or side wall mixture (12) over an extent of at least 3 mm at its two axial boundaries facing towards the sides of the tyre.

9. Pneumatic vehicle tyre (1) according to at least one of the preceding claims, characterised in that the second rubber mixture (9) is in visual contrast with the first rubber mixture (10).

## Revendications

1. Bandage pneumatique pour véhicule (1) comportant une carcasse (2) qui va de la zone du point vertical du pneu jusque dans les zones du talon (14), comportant en outre une unité de ceinture (4) disposée entre la bande de roulement (8) et la carcasse (2), la bande de roulement (8) étant constituée de deux mélanges au moins de caoutchouc et la surface (13) de la bande de roulement (8) venant en contact avec la chaussée étant couverte à plus de la moitié, par un premier mélange de caoutchouc (recouvrement) (10) présentant une résistance électrique spécifique supérieure à 10 exp 10 Ohm x cm, caractérisé en ce que l'autre surface (13) venant en contact avec la chaussée est couverte par un second mélange de caoutchouc (base) (9) dont la résistance électrique spécifique est inférieure à 10 exp 8 Ohm x cm, en ce que le premier mélange de caoutchouc (10) couvre dans le sens radial au moins 40 % de toute l'épaisseur de la bande de roulement, en ce que le second mélange de caoutchouc (9) atteint l'unité de ceinture (4), couvre au-dessous du premier mélange de caoutchouc (10), tout l'espace situé entre ce dernier et l'unité de ceinture (4) et en outre, est en contact à ses deux limites axiales sur les côtés du pneu avec au moins un autre mélange de caoutchouc qui présente une résistance électrique spécifique inférieure à 10 exp 8 Ohm x cm.

2. Bandage pneumatique pour véhicule (1) selon la revendication 1, caractérisé en ce que le second mélange de caoutchouc (9) arrive dans la zone centrale de la bande de roulement (8) jusqu'à la surface (13) de la bande de roulement (8) venant en contact avec la chaussée.

3. Bandage pneumatique pour véhicule (1) selon la revendication 1, caractérisé en ce que le second mélange de caoutchouc (9) arrive au moins dans une zone d'épaulement jusqu'à la surface (13) de la bande de roulement (8) venant en contact avec la chaussée.

4. Bandage pneumatique pour véhicule (1) selon au moins l'une quelconque des revendications précédentes, caractérisé en ce que le premier mélange de caoutchouc (10) se compose d'un mélange contenant de la silice.

5. Bandage pneumatique pour véhicule (1) selon au moins l'une quelconque des revendications précédentes, caractérisé en ce que le second mélange de caoutchouc (9) se compose d'un mélange de caoutchouc contenant de la suie.

6. Bandage pneumatique pour véhicule (1) selon au moins l'une quelconque des revendications précédentes, caractérisé en ce que, au moins une série de blocs de sculptures (16) de la bande de roulement (8) est réalisée avec le second mélange de caoutchouc (9).

7. Bandage pneumatique pour véhicule (1) selon au moins l'une quelconque des revendications précédentes, caractérisé en ce que le second mélange de caoutchouc (9) est en contact sur ses deux limites axiales, sur les côtés du pneu, avec l'aile (11) et/ou le mélange de la paroi latérale (12).

8. Bandage pneumatique pour véhicule (1) selon la revendication 7, caractérisé en ce que le second mélange de caoutchouc (9) est en contact sur ses deux limites axiales, sur les côtés du pneu, avec l'aile (11) et/ou le mélange de la paroi latérale (12) par l'intermédiaire d'une extension de 3 mm au moins.

9. Bandage pneumatique pour véhicule (1) selon au moins l'une quelconque des revendications précédentes, caractérisé en ce que le second mélange de caoutchouc (9) présente un contraste visuel par rapport au premier mélange de caoutchouc (10).
